# FASCICULE DE BREVET EUROPEEN

(11) **EP 0 443 949 B1**
(45) Date de publication et mention de la délivrance du brevet: **12.10.1994**
(21) Numéro de dépôt: 91400452.8
(22) Date de dépôt: 20.02.1991
(51) Int. Cl.: C03B 9/38

(54) **Refroidissement des ébaucheurs des machines de verre creux**
Kühlungen für Vorformen von Hohlglasmaschinen
Cooling of blank molds of hollow glassware machines

(30) Priorité: 21.02.1990 FR 9002091
(43) Date de publication de la demande: 28.08.1991
(73) Titulaire: SAINT-GOBAIN EMBALLAGE, 92400 Courbevoie (FR)
(72) Inventeur: Richard, Jacques, F-71380 Allériot (FR)
(74) Mandataire: Eudes, Marcel

(56) Documents cités:
- EP-A- 0 050 764
- EP-A- 0 153 534
- EP-A- 0 400 774
- DE-C- 3 040 356
- GB-A- 2 143 520
- US-A- 3 499 746

## Description

La fabrication de la plupart des articles de verre creux s'effectue en deux étapes ; elle emploie alors le plus souvent l'un des procédés soufflé-soufflé ou pressé-soufflé. Ces deux procédés sont très voisins et les machines employées foncièrement semblables.

L'invention a trait au refroidissement des moules ébaucheurs, qui joue un rôle important et dont l'amélioration permet en particulier d'augmenter les cadences.

Dans la mesure du possible, l'industrie du verre creux recourt de plus en plus au procédé pressé-soufflé, même pour des articles à col étroit, car il conduit à une fabrication plus précise ; d'autre part, celle-ci se fait le plus souvent en double ou multiple paraison. C'est pourquoi la description ci-dessous se réfère essentiellement à un tel cas, sans qu'il faille voir là une quelconque limitation.

A chaque poste d'ébauche le bâti de la machine, formée d'une succession de sections individuelles, reçoit d'abord le mécanisme de formage interne, centré par un étrier et réglable en hauteur en fonction des articles à fabriquer. Sur les chapeaux que traversent les organes de formage reposent les moules de bague, portés par un bras de transfert en retournement en face duquel se referme une charnière dont chaque mâchoire supporte par l'intermédiaire d'un porte-moules articulé un jeu de demi-moules de corps ; après introduction de la paraison, ceux-ci recevront enfin leur fond pour permettre le formage.

Destiné à transférer ensuite au poste de finition l'ébauche tenue par sa bague définitivement formée, le bras de retournement passera alors entre les mâchoires largement ouvertes de la charnière.

L'ensemble du dispositif forme un montage extrêmement compact.

Chaque charnière est formée de deux membrures jumelles : le plus souvent, le refroidissement des moules se faisait par soufflage d'air à partir de buses appartenant à des empilages fixes situés latéralement, de part et d'autre des mâchoires, dans l'étroit espace laissé libre d'un poste au voisin, et placées à hauteur convenable pour atteindre les moules entre ces membrures ; parfois, il pouvait se faire par injection d'air sur leurs faces externes à partir des charnières.

Une solution plus efficace tend à se développer aujourd'hui ; elle consiste à injecter dans les moules un fluide de refroidissement, normalement de l'air ventilé à basse pression, ceci le plus souvent en direction de canaux qui traversent verticalement ces moules pour échapper à l'air libre. La publication EP-A-0 050 764 (HEYE), en particulier, décrit un ensemble de collecteurs de répartition d'air alimentés par des conduites articulées à partir de distributeurs situés sur le bâti de la machine. On peut monter ces collecteurs à la partie supérieure des porte-moules pour refroidir les moules de haut en bas ou au contraire à leur partie inférieure pour opérer de bas en haut. Dans ce dernier cas, les collecteurs peuvent porter des buses de soufflage dirigées vers la paroi externe du moule de bague ; dans le premier au contraire, il est peu aisé d'en installer comme peut le suggérer la publication DE-A-30 40 356, car les buses masquent alors l'échappement des canaux ou voient leur action contrariée par l'effet de l'air qui s'échappe du moule de corps.

La plus commode des constructions proposées, décrite par la publication EP-A-0 153 534 (EMHART), emploie deux collecteurs coiffant chacun un des demi-moules.

Comme on le verra ci-dessous, l'invention se propose au premier chef de remédier à certaines lacunes que ces solutions laissent encore apparaître quant au refroidissement des moules, par l'emploi de têtes de soufflage auxiliaires d'air ventilé placées sous la charnière des des demi-moules de corps, au voisinage immédiat des flancs desdits moules et alimentées à partir de distributeurs situés sur le bâti de la machine et directement solidaires de la partie haute du mécanisme de formage interne.

Elle sera décrite ci-dessous dans le cadre d'une adaptation avantageuse sur une machine existante, en référence aux dessins, qui montrent :
- Figure 1 : une perspective partielle d'un ensemble ébaucheur,
- Figure 2 : une vue de face de cet ensemble, modifié par mise en place de buses selon l'invention,
- Figure 3 : une vue de dessus du même ensemble, non équipé,
- Figure 4 : une vue de dessus de cet ensemble après sa modification.

Ces figures portent en traits mixtes divers l'indication de certaines parties enlevées et comprennent une certain nombre de coupes partielles pour montrer la structure interne de plusieurs organes sans avoir à décrire inutilement tous leurs détails.

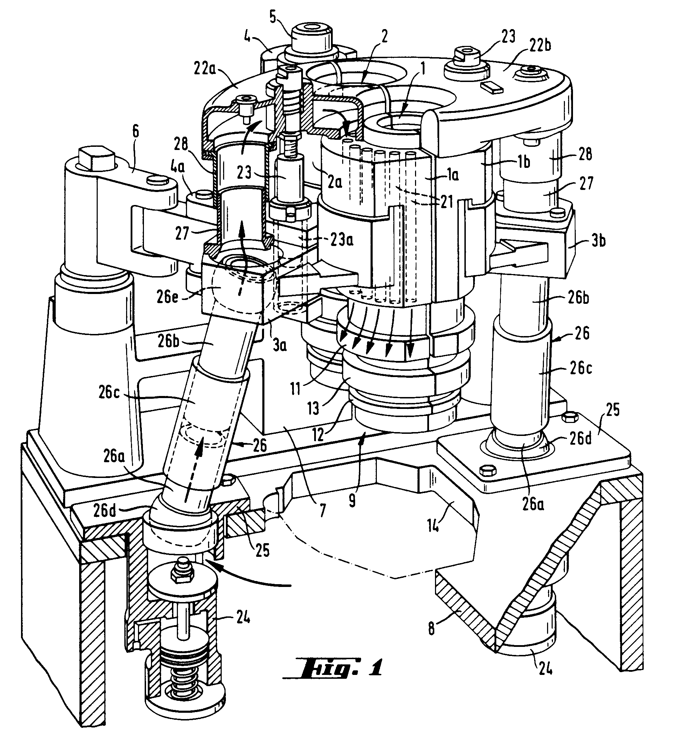

La figure 1 reproduit un schéma de la société Emhart donnant une vue partielle, mécanisme de poinçons et bras de transfert enlevés, d'un dispositif ébaucheur pour double paraison muni d'un appareillage de refroidissement direct des ébaucheurs.

Ce dispositif comprend deux moules de corps 1 et 2, ce dernier presque entièrement caché, formés l'un et l'autre de deux demi-moules, soit 1a et 1b, 2a et 2b. Les deux demi-moules 1a et 2a sont posés sur un porte-moules 3a articulé sur la mâchoire 4a d'une charnière peu visible 4, d'axe 5, commandée par un embiellage 6, l'ensemble étant monté sur un socle 7 fixé sur le bâti 8 de la machine ; le montage des demi-moules 1b et 2b est symétrique.

L'ensemble se referme sur deux moules de bague 9 tenus par un bras de transfert d'axe horizontal 10 placé en face de la charnière mais non représenté sur cette figure.

On peut encore voir sur la figure que chaque moule de corps porte une collerette 11 correspondant à une gorge interne qui le centre sur le moule de bague 9 ; de même les deux moitiés de celui-ci portent une collerette 12 par laquelle il est maintenu sur le bras de transfert 10, enfin une collerette 13 où se loge l'anneau guide qui lors du pressage sert d'abord à centrer le poinçon, puis à former le buvant de la bague.

Le mécanisme de poinçons, non représenté ici, est donc installé sous cet ensemble, sa partie supérieure passant à travers la lumière 14 pour venir au contact des faces inférieures de chacun des moules de bague, à une hauteur réglée en fonction des dimensions de l'article.

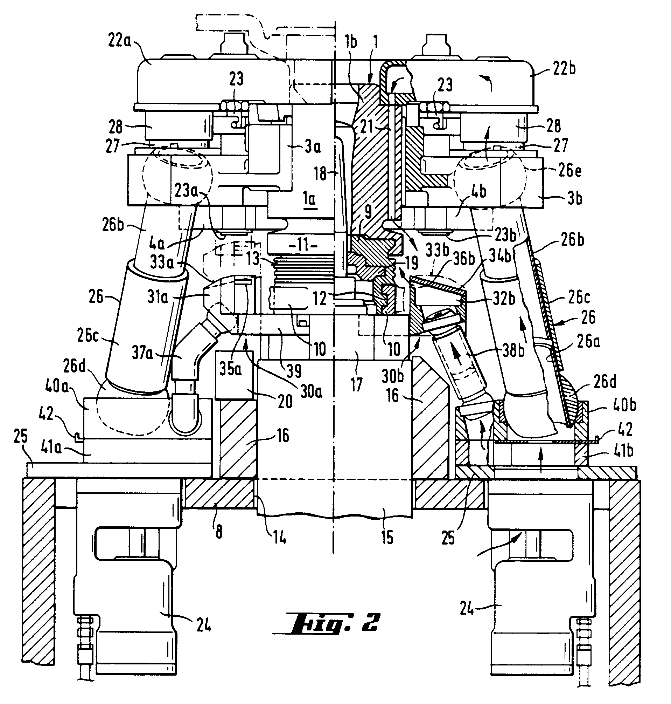

Cette partie supérieure se voit sur la figure 2, où la plupart des pièces mentionnées plus haut apparaissent encore ; elle comprend un double carter tel que 15, centré par un étrier 16 et, à travers chacun des deux chapeaux 17 placés au contact d'un moule de bague 9, un poinçon 18 fait saillie à l'intérieur de ce moule, dans l'ouverture de l'anneau guide 19. L'ensemble se règle à la hauteur du bras 10 à l'aide d'un organe à crémaillère 20.

Les quatre demi-moules sont refroidis par un ensemble de canaux verticaux tels que 21, alimentés de haut en bas à partir de deux collecteurs 22a, 22b appliqués chacun sur l'une ou l'autre de leurs faces supérieures par un verrou à baïonnette 23, monté dans l'axe 23a, 23b du porte-moule correspondant et qu'il est inutile de décrire en détail.

L'air ventilé sous une pression de l'ordre de 100 mb atteint depuis l'intérieur du bâti 8 deux distributeurs symétriques 24, chacun coiffé d'une platine 25 et piloté par une vanne pneumatique. Lors de chaque pressage, l'ouverture des distributeurs 24 permet à l'air de s'engager dans des conduits 26 pour atteindre sur une excroissance de chaque porte-moules un passage 27 d'où un conduit 28 alimente le collecteur correspondant 22a ou 22b.

Chaque conduit 26 est télescopique, constitué de deux éléments 26a, 26b raccordés par un manchon 26c et montés respectivement par des rotules, 26d sur la platine 25 et 26e sur le porte-moule à l'entrée du passage 27. De cette façon le système peut accompagner les mouvements d'ouverture et de fermeture de la charnière 4. De même chaque conduit 28 est formé de deux éléments coulissants ce qui lui permet de s'adapter aux dilatations comme à certaines différences de hauteur des moules et sauvegarde l'interchangeabilité de ces derniers.

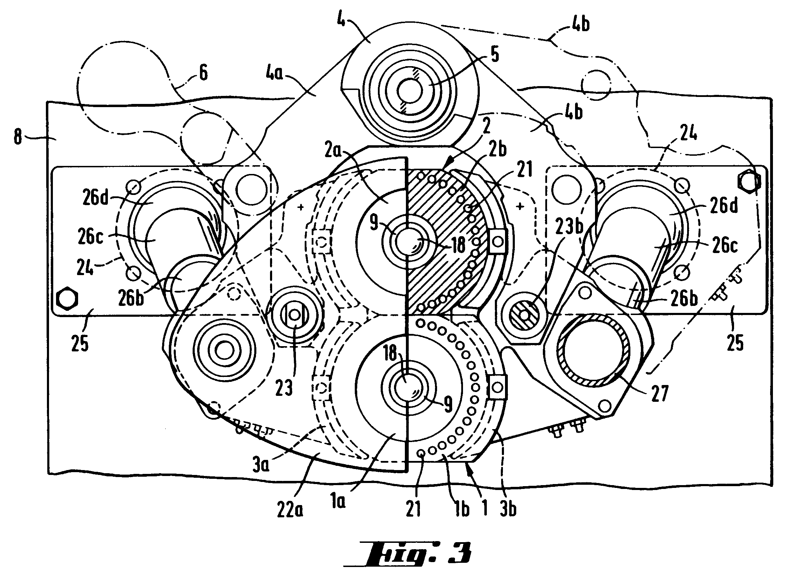

La figure 3 montre en plan l'imbrication de la charnière et des porte-moules autour de cet ensemble, ainsi que la position d'ouverture de l'une des mâchoires.

Le système de refroidissement dont les ébaucheurs sont ainsi équipés se substitue aux empilages de soufflage externe que l'on venait placer sur les lumières où se logent désormais les distributeurs 24. Il est très efficace car l'air, soufflé par le haut à l'intérieur même des moules, refroidit d'abord la partie de ceux-ci la plus proche du fond, zone sensible où se trouve la plus grande quantité de verre.

Le moule de bague constitue toutefois une autre zone sensible puisque la bague doit être figée dès ce stade de la fabrication pour servir au transfert par retournement vers le poste de finition. Or ce moule est d'autant plus difficile à refroidir par l'air déjà chaud qui s'échappe des canaux 21 du moule de corps que sa seule partie apparente est celle qui jouxte la collerette 13. Ceci reste vrai même si l'on a pu prévoir d'insuffler cet air non plus sur la collerette 11 mais vers des canaux internes au moule de bague, ou d'en diriger une partie par des canaux 21 spécifiques, isolés, débouchant sur un quelconque système d'ailettes au demeurant plus coûteux.

Le point faible de l'appareil ou des appareils semblables de soufflé-soufflé, qu'il est inutile de décrire ici, est précisément un assez médiocre refroidissement du moule de bague.

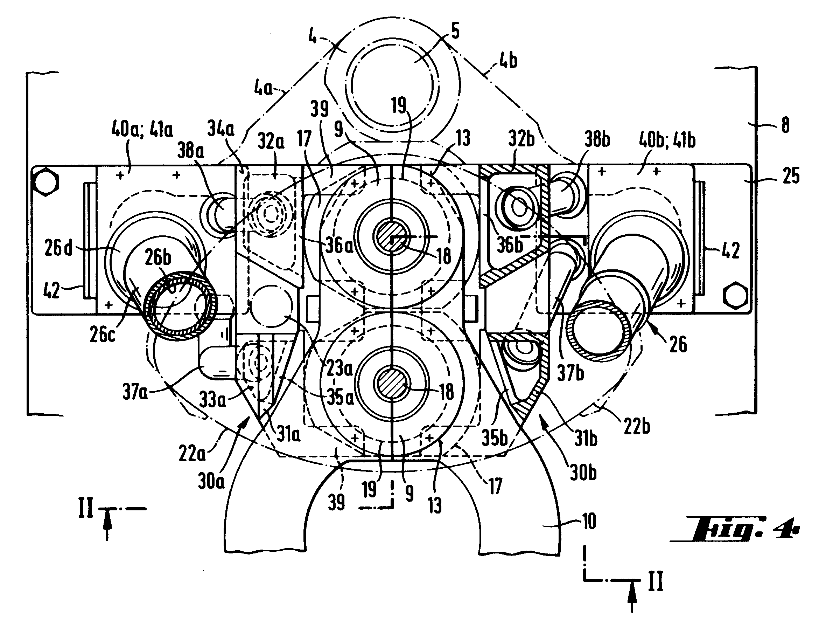

Le dispositif selon l'invention se propose d'y remédier et offre au moins trois avantages : s'adapter facilement à des moules divers, concilier le refroidissement de la bague et celui du fond, agir de plus près que des buses fixes et plus longuement que des buses solidaires des demi-moules. Il comprend, de part et d'autre de l'ébaucheur et juste sous les charnières, comme le montre la figure 2, deux têtes de soufflage 30a, 30b. Comme on le voit mieux sur la figure 4, chacune est porteuse de deux buses jumelles, 31a et 32a par exemple.

Ces deux buses sont disposées le long du bras de transfert 10, leurs parois internes verticales faisant face à celui-ci et respectivement à chacun des moules 9 de bague, la première dans une position oblique pour éviter l'élargissement du bras 10. Chacune possède une échancrure qui forme sous son couvercle 33a, 34a, incliné perpendiculairement à son plan médian, une fente de soufflage horizontale 35a, 36a de section adaptée, débouchant au dessus du bras, en face de la collerette 13 ; pour faciliter réglages et adaptations, elle peut même être interchangeable.

Les deux buses 31a, 32a sont séparées par un espace apte à dégager le prolongement des axes 23a, 23b pour laisser place à leur partie inférieure aux éventuels organes de fixation propres à d'autres modèles de porte-moules et facilitant l'échappement de l'air ; il est possible de les alimenter, à partir du distributeur 24, par des conduits séparés 37a, 38a.

Chaque tête 30a ou 30b est prise simultanément sur les deux chapeaux de carter 17 par des brides 39 et ainsi rendue solidaire de ce carter au plus près des moules 9.

Le distributeur 24 reste assez semblable, quoique rehaussé puisque sa platine 25 ne sert plus que de socle à une platine 40a, qui ne porte plus un mais trois logements de rotules dont l'un est placé en arrière, par l'intermédiaire d'une entretoise 41a porteuse d'un registre diaphragmé 42 permettant de régler la répartition des débits d'air.

Les conduits 26 voient seulement leurs rotules 26d décalées et leurs éléments 26a raccourcis. Les conduits 37a, 38a sont également télescopiques, formés de deux éléments emboitants à rotules, bien que les buses décrites ne s'ouvrent pas à l'instar de la charnière ; ceci permet de les adapter en hauteur sans démontage et les rend interchangeables en même temps que les poinçons. Ils sont aussi coudés comme on peut le voir, pour contourner la commande de la crémaillère 20.

Du côté opposé, les organes correspondants, dont les repères sont éventuellement affectés d'un indice b, sont semblables et possèdent des buses de soufflage symétriques ; mais l'arête supérieure du carter 16 est abattue et l'alimentation des têtes s'en trouve un peu simplifiée : plus précisément, les conduits 37b, 38b sont droits et par conséquent les logements de leurs rotules disposés obliquement.

On se rend compte que les buses 31, 32 viennent pratiquement s'insérer sous la charnière à proximité immédiate des moules de corps et soufflent au plus près des moules de bague, sur une large portion de leur périphérie, tout en n'encombrant qu'une zone réduite. Dans cette zone, leur couvercle incliné offre une surface déflectrice à l'air chaud qui s'échappe des canaux de la partie haute de l'ébaucheur, permettant au soufflage par les buses d'atteindre sa pleine efficacité en glissant sous ce courant d'évacuation.

De plus, et comme il vient d'être dit, le dispositif entier, solidaire des cartouches, s'adapte de lui-même à leur position de réglage par le jeu des conduits télescopiques ; les rotules facilitent simplement les adaptations transversales dans la limite des tolérances de montage. Dans la mesure où des précautions suffisantes seraient prises contre les températures élevées, il n'est toutefois pas interdit d'envisager l'emploi de tubes de raccordement à gaines métalliques souples.

Il est également possible d'alimenter les buses jumelles à partir d'un même conduit, par un passage ménagé dans le socle de la tête qui les porte. Enfin il facile de voir que l'utilisation du système décrit de refroidissement des moules de bagues ne se trouve liée ni à l'existence du pressage, ni à un emploi impératif du système de refroidissement des moules de corps décrit ci-dessus en liaison avec le schéma de la société Emhart, même si les deux ensembles se combinent avantageusement.

En triple paraison, il reste éventuellement possible, pour éviter les emplacements des axes 23a, 23b, de ne prévoir sur chaque tête que deux buses jumelles, en ajustant correctement leurs débits sur les trois moules de bague.

## Revendications

1. Dispositif de refroidissement des moules de bague sur les ébaucheurs des machines de verre creux, caractérisé par l'emploi de têtes de soufflage (30a, 30b) auxiliaires d'air ventilé placées sous la charnière (4) des demi-moules de corps (1a...) au voisinage immédiat des flancs des moules de bague (9) et alimentées à partir de distributeurs (24) situés sur le bâti de la machine, et en ce que ces têtes sont directement solidaires de la partie haute (15, 17) du mécanisme de formage interne.

2. Dispositif de refroidissement selon la revendication 1, en multiple paraison, caractérisé en ce que les têtes sont équipées de fentes de soufflage séparées (35a, 36a), de section adaptée, propres à chaque moule de bague, débouchant en face de sa collerette externe (13), au dessus du bras de retournement.

3. Dispositif de refroidissement selon l'une des revendications 1 et 2, caractérisé en ce qu'il comprend symétriquement deux têtes de soufflage, chacune porteuse de deux buses jumelles (31a, 32a ...) séparées par un espace dégageant les axes (23a, 23b) des porte-moules.

4. Dispositif de refroidissement selon la revendication 3, caractérisé en ce que les deux buses sont disposées le long du bras de retournement (10), leurs parois internes faisant face à ce bras et respectivement à chacun des moules de bague.

5. Dispositif de refroidissement selon la revendication 4, caractérisé en ce que chaque buse possède un couvercle (33a, 34a ...) incliné perpendiculairement à son plan médian.

6. Dispositif de refroidissement selon la revendication 5, caractérisé en ce que chaque fente (35a, 36a ...) est constituée d'une échancrure sous ledit couvercle.

7. Dispositif de refroidissement selon la revendication 3, caractérisé en ce que les têtes sont alimentées par des conduits (37a, 37b ...) télescopiques et montés sur rotules.

8. Dispositif de refroidissement selon la revendication 3, caractérisé en ce que les buses de chaque tête sont alimentées à partir du distributeur correspondant par des conduits séparés (37a, 38a).

9. Dispositif de refroidissement selon l'une des revendications 1 à 8, caractérisé par sa combinaison avec un système de refroidissement des ébaucheurs à canaux verticaux (21) alimentés de haut en bas à partir de deux collecteurs (22a, 22b) appliqués sur les faces supérieures des demi-moules de corps et alimentés à partir des mêmes distributeurs.

## Claims

1. Cooling device for collar moulds on the rough-shapers of machines for making hollow glass articles, characterized by the use of auxiliary blowing heads (30a, 30b) for ventilated air, situated beneath the hinge (4) of the body half-moulds (1a...) in the immediate vicinity of the flanks of the collar moulds (9) and supplied from distributors (24) situated on the base-block of the machine, and in that these heads are directly integral with the upper part (15, 17) of the internal forming mechanism.

2. Cooling device according to Claim 1, for several parisons, characterized in that the heads are equipped with separate blowing slits (35a, 36a), of appropriate cross-section, proper to each collar mould, the slit leading out opposite its external flange (13), above the inverting arm.

3. Cooling device according to one of Claims 1 and 2, characterized in that it comprises, symmetrically, two blowing heads, each carrying two twinned nozzles (31a, 32a ...) separated by a space allowing clearance for the axes (23a, 23b) of the mould-carriers.

4. Cooling device according to Claim 3, characterized in that the two nozzles are disposed alongside the inverting arm (10), their internal walls being opposite this arm and respectively opposite each of the collar moulds.

5. Cooling device according to Claim 4, characterized in that each nozzle possesses a cover (33a, 34a ...) inclined perpendicularly to its median plane.

6. Cooling device according to Claim 5, characterized in that each slit (35a, 36a ...) is formed by a groove beneath said cover.

7. Cooling device according to Claim 3, characterized in that the heads are supplied through telescopic ducts (37a, 37b ...) mounted on swivel joints.

8. Cooling device according to Claim 3, characterized in that the nozzles of each head are supplied from the corresponding distributor through separate ducts (37a, 38a).

9. Cooling device according to one of Claims 1 to 8, characterized by its combination with a cooling system for rough-shapers having vertical ducts (21) supplied in downward flow from two headers (22a, 22b) applied onto the upper faces of the body half-moulds and supplied from the same distributors.

## Patentansprüche

1. Vorrichtung zum Kühlen von Ringformen in Vorformmaschinen für Hohlglas, **dadurch gekennzeichnet, daß** zusätzliche Blasköpfe (30a, 30b) für ventilierte Luft unter dem Zangengelenk (4) der Mantelformhälften (1a...) in unmittelbarer Nähe der Seitenflächen der Ringformen (9) eingesetzt und von Verteilern (24) versorgt werden, die sich auf dem Maschinenrahmen befinden, und daß diese Köpfe unmittelbar mit dem oberen Teil (15, 17) des Innen-Formgebungsmechanismus verbunden sind.

2. Vorrichtung zum Kühlen nach Anspruch 1 von mehreren Külbeln, **dadurch gekennzeichnet, daß** die Blasköpfe mit getrennten Blasschlitzen (35a, 36a) mit entsprechendem Querschnitt und angepaßt an jede Ringform ausgerüstet sind, die oberhalb eines Schwenkarms gegenüber ihrem Außenbund (13) münden.

3. Vorrichtung zum Kühlen nach Anspruch 1 oder 2, **dadurch gekennzeichnet, daß** sie zwei symmetrische Blasköpfe enthält, die jeweils zwei miteinander verbundene Düsen (31a, 32a...) tragen, welche durch einen Zwischenraum getrennt sind, der Platz für die Achsen (23a, 23b) der Formhalterungen läßt.

4. Vorrichtung zum Kühlen nach Anspruch 3, **dadurch gekennzeichnet, daß** die beiden Düsen entlang des Schwenkarms (10) angeordnet sind und ihre Innenwände diesem Arm und je einer der Ringformen gegenüberstehen.

5. Vorrichtung zum Kühlen nach Anspruch 4, **dadurch gekennzeichnet, daß** jede Düse eine Abdeckung (33a, 34a...) besitzt, die zu ihrer Mittelebene senkrecht steht.

6. Vorrichtung zum Kühlen nach Anspruch 5, **dadurch gekenn**zeichnet, daß jeder Schlitz (35a, 36a...) aus einem bogenförmigen Ausschnitt unterhalb der Abdeckung besteht.

7. Vorrichtung zum Kühlen nach Anspruch 3, **dadurch gekennzeichnet, daß** die Köpfe von auf Kugelgelenken befestigten Teleskopleitungen (37a, 37b...) versorgt werden.

8. Vorrichtung zum Kühlen nach Anspruch 3, **dadurch gekennzeichnet, daß** die Düsen jedes Kopfes ausgehend vom entsprechenden Verteiler durch getrennte Leitungen (37a, 38a) versorgt werden.

9. Vorrichtung zum Kühlen nach einem der Ansprüche 1 bis 8, **dadurch gekennzeichnet, daß** sie mit einem Kühlsystem der Vorformen mit senkrechten Kanälen (21) kombiniert ist, die von oben nach unten durch zwei Sammler (22a, 22b) versorgt werden, die auf den Oberseiten der Mantelformhälften angebracht und ausgehend von denselben Verteilern gespeist sind.
